# FASCICULE DE BREVET EUROPEEN

(11) **EP 4 382 417 B1**
(45) Date de publication et mention de la délivrance du brevet: **25.06.2025**
(21) Numéro de dépôt: 23199996.2
(22) Date de dépôt: 27.09.2023
(51) Int. Cl.: B64C 25/14, B64C 25/24, B64C 25/26, B64C 25/60

(54) **ATTERRISSEUR À BALANCIER RETRACTABLE MUNI D'UN MOTEUR ÉLECTRIQUE ET AÉRONEF MUNI D'AU MOINS UN TEL ATTERRISSEUR**
EINZIEHFAHRWERK MIT EINER GESCHLEPPTEN LENKERACHSE UND EINEM ELEKTROMOTOR, UND EIN LUFTFAHRZEUG MIT MINDESTENS EINEM SOLCHEN FAHRWERK
RETRACTABLE LANDING GEAR PROVIDED WITH A TRAILING LINK AND AN ELECTRIC MOTOR, AND AN AIRCRAFT PROVIDED WITH AT LEAST ONE SUCH LANDING GEAR

(30) Priorité: 08.12.2022 FR 2212992
(43) Date de publication de la demande: 12.06.2024
(73) Titulaire: Airbus Helicopters, 13725 Marignane Cedex (FR)
(72) Inventeur: BECQUET, Roland, 13590 MEYREUIL (FR); ANSQUER, Benjamin, 94100 SAINT MAUR DES FOSSÉS (FR)
(74) Mandataire: GPI Brevets

(56) Documents cités:
- EP-A1- 3 492 375
- FR-A1- 2 946 319
- FR-A1- 3 001 708

## Description

La présente invention est du domaine des trains d'atterrissage pour aéronef.

La présente invention concerne un atterrisseur à balancier rétractable motorisé destiné à équiper un aéronef et un aéronef muni d'au moins un tel atterrisseur.

Classiquement, un aéronef comporte un train d'atterrissage. Le train d'atterrissage est parfois muni d'une pluralité d'atterrisseurs. Un atterrisseur d'un aéronef peut comprendre au moins une roue et un amortisseur.

Selon un exemple, le train d'atterrissage peut comporter deux atterrisseurs principaux et un atterrisseur auxiliaire, chacun pouvant être à balancier.

Par exemple, un atterrisseur à balancier peut comprendre une jambe de train oscillante dénommée plus simplement « balancier ». La jambe de train est articulée à une structure porteuse de l'aéronef et porte au moins une roue. La jambe de train, voire la roue, peuvent être rétractées en vol dans une case de train. Dès lors, un atterrisseur à balancier comporte un dispositif de rétraction permettant de déplacer la roue d'une position déployée ou sortie à une position rétractée ou rentrée afin d'escamoter en vol tout ou partie de l'atterrisseur dans la case de train. Par exemple, une contrefiche munie d'un amortisseur et d'un vérin hydraulique peut faire office de dispositif de rétraction.

Par exemple, des atterrisseurs rétractables, tels que décrits dans les documents EP 3248869 et WO 2008/060338, comportent un système de rétraction intégré à un amortisseur et utilisant la compression de l'amortisseur de l'atterrisseur pour déplacer l'atterrisseur de la position déployée à la position rétractée. Toutefois, la compression d'un tel amortisseur nécessite un effort important imposant généralement un système de rétraction hydraulique. De plus, lors d'un atterrissage dur et/ou violent, des efforts importants sont exercés sur l'amortisseur et peuvent dans ce cas endommager le système de rétraction, voire l'amortisseur et la cellule de l'aéronef.

Selon un autre exemple, le document EP 3492375 décrit un atterrisseur rétractable pour aéronef comportant un amortisseur reliant la structure à un ensemble à balancier muni d'un balancier portant une roue et d'une contrefiche briseuse formée de deux bielles. L'atterrisseur comporte également deux actionneurs linéaires dont un actionneur relié à la contrefiche briseuse et un actionneur relié à la structure de l'aéronef et à l'ensemble à balancier. Les deux actionneurs autorisent deux rotations autour d'axes distincts de l'ensemble à balancier, en dessous de l'amortisseur, afin de rétracter l'ensemble à balancier. L'amortisseur reste dans ce cas dans une position fixe lors de la rétraction de l'atterrisseur. Un tel système de rétraction est complexe en raison de l'utilisation de deux actionneurs, de la multiplicité des liaisons et des mouvements nécessaires à la rétraction et au déploiement de l'atterrisseur.

Le document FR 3001708 décrit un train d'atterrissage rétractable muni d'un balancier portant une roue et d'un vérin-amortisseur. Le vérin-amortisseur est pourvu d'un corps et d'une tige mobile par rapport au corps. Le train d'atterrissage est muni d'une genouillère comportant deux articulations reliées respectivement au balancier et au vérin-amortisseur. La genouillère a une zone en appui sur une butée du balancier lorsque le train d'atterrissage est dans une position déployée.

Le document FR 2946319 décrit un atterrisseur à balancier comportant un amortisseur, une roue reliée à une tige mobile de l'amortisseur, une contrefiche briseuse formée de deux bielles articulées entre elles et un organe de stabilisation relié à une des bielles de la contrefiche briseuse. L'organe de stabilisation est muni de deux biellettes articulées entre elles et maintenues alignées par un ressort de verrouillage. Les deux bielles de la contrefiche sont maintenues alignées par l'organe de stabilisation lorsque l'atterrisseur est en position déployée. Un actionneur, tel un moteur, est relié à une des biellettes de l'organe de stabilisation afin de déplacer l'ensemble de l'atterrisseur entre les positions déployée et rétractée.

Le document FR 3011816 décrit un atterrisseur à balancier pour un giravion muni d'un balancier relié à une roue, d'un amortisseur et d'un vérin de manœuvre, ainsi que d'un rail de guidage fixe par rapport au giravion et d'un coulisseau coulissant le long du rail de guidage à l'aide du vérin de manœuvre. L'amortisseur est articulé au coulisseau et au balancier. Le vérin de manœuvre permet ainsi, via le déplacement du coulisseau le long du rail, de déplacer le train d'atterrissage entre une position déployée et une position rétractée.

L'art antérieur comporte également le document FR 2884801 qui décrit un atterrisseur rétractable muni d'un actionneur linéaire alors que le document WO 2017/182955 décrit un atterrisseur droit rétractable par rotation.

La présente invention a alors pour but de proposer un atterrisseur alternatif visant par exemple à limiter les efforts de rétraction et de déploiement de l'atterrisseur, son encombrement et/ou les effets sur l'atterrisseur d'un atterrissage dur ou violent.

Un objet selon la présente invention est un atterrisseur rétractable pour aéronef, l'atterrisseur comportant :
- un balancier destiné à être articulé à une structure de l'aéronef et portant au moins une roue, ladite au moins une roue étant mobile entre une position déployée et une position rétractée,
- un amortisseur muni d'une tige coulissant dans un corps, l'amortisseur étant destiné à être articulé à la structure,
- une contrefiche munie d'une première biellette et d'une seconde biellette articulées entre elles par une première liaison mécanique, la première biellette étant articulée à l'amortisseur, et
- un actionneur.

Cet atterrisseur est remarquable en ce que l'actionneur est d'une part destiné à être relié à la structure de l'aéronef et d'autre part relié à la seconde biellette afin d'entraîner en rotation la seconde biellette par rapport à la structure, l'atterrisseur comportant :
- une bielle articulée d'une part à l'amortisseur par une deuxième liaison mécanique à un unique degré de liberté en rotation et d'autre part au balancier, la bielle étant désalignée de l'amortisseur lorsqu'une force inférieure à un effort prédéterminé est exercée sur l'amortisseur, et
- un dispositif de verrouillage comportant un organe de rappel élastique et un dispositif de butée, l'organe de rappel élastique étant fixé par deux extrémités respectivement à la contrefiche et à un ensemble articulé comportant le balancier, la bielle et une troisième liaison mécanique reliant le balancier et la bielle, l'organe de rappel élastique exerçant un effort de traction entre la contrefiche et l'ensemble articulé, le dispositif de butée étant configuré pour arrêter un déplacement relatif entre les première et seconde biellettes autour d'un axe de rotation de la première liaison mécanique, sous l'action généré par l'effort de traction de l'organe de rappel élastique lorsque la roue est dans la position déployée.

Un aéronef peut comporter un ou plusieurs atterrisseurs rétractables formant un train d'atterrissage de l'aéronef. L'aéronef comporte alors au moins un logement pouvant accueillir au moins un atterrisseur. Un logement permet ainsi de loger au moins partiellement, voire totalement, un atterrisseur en vol dans la position rétractée de la roue.

L'actionneur permet de déplacer la roue de la position déployée vers la position rétractée, et inversement de la position rétractée vers la position déployée. L'actionneur est en effet lié à la seconde biellette et génère le déplacement de la seconde biellette par rapport à la structure de l'aéronef, ce qui provoque en conséquence les déplacements simultanés de la première biellette, de l'amortisseur, de la bielle, du balancier et de la roue.

La roue est positionnée dans la position déployée avant un atterrissage et tant que l'aéronef est au sol. La roue peut être disposée en vol dans la position rétractée, l'atterrisseur étant alors escamoté partiellement ou totalement dans un logement de l'aéronef.

Le terme « articulé » signifie que les deux pièces articulées entre elles sont reliées par une liaison mécanique comportant au moins un degré de liberté en rotation. Deux pièces articulées entre elles peuvent par exemple être reliées par une liaison mécanique à un unique degré de liberté en rotation, de type pivot, une telle liaison mécanique de type pivot autorisant une rotation autour d'un unique axe de rotation. Deux pièces articulées entre elles peuvent alternativement être reliées par une liaison mécanique à trois degrés de liberté en rotation de type rotule autorisant des rotations autour de trois axes de rotation sécant en un point, ou par une liaison à deux degrés de liberté en rotation de type cardan autorisant des rotations autour de deux axes de rotation sécants. Lorsque l'atterrisseur comporte plusieurs liaisons mécaniques à un unique degré de liberté en rotation, les axes de rotation de ces liaisons mécaniques, y compris la première liaison mécanique, sont parallèles entre eux.

La première liaison mécanique reliant la première biellette et la seconde biellette est par exemple formée par une liaison de type rotule permettant des mouvements relatifs de rotation de la première biellette et de la seconde biellette autour de trois axes de rotation sécants. Alternativement, la première liaison mécanique peut être de type pivot ou de type cardan. Dans le cas d'une liaison de type pivot, l'unique axe de rotation est par exemple orienté sensiblement horizontalement, lorsque l'aéronef repose sur un sol horizontal.

La deuxième liaison mécanique reliant la bielle et l'amortisseur est formée par une liaison de type pivot permettant des mouvements relatifs de rotation de la bielle et de l'amortisseur autour d'un unique axe de rotation.

La troisième liaison mécanique reliant le balancier et la bielle peut être formée par une liaison de type rotule permettant des mouvements relatifs de rotation du balancier et de la bielle autour de trois axes de rotation sécants. Alternativement, la troisième liaison mécanique peut être de type pivot ou de type cardan.

L'amortisseur et la bielle constituent ainsi un contreventement principal du balancier lorsque la roue est dans la position déployée. La contrefiche, et donc les première et seconde biellettes, constituent quant à elles un contreventement secondaire assurant notamment le maintien et le verrouillage en position du contreventement principal et, par suite, du balancier et de la roue lorsque la roue est dans la position déployée.

L'atterrisseur selon l'invention bénéficie ainsi d'un double contreventement permettant de garantir un maintien efficace de la roue dans la position déployée.

En outre, la bielle est désalignée de l'amortisseur, tout en formant un angle obtus avec l'amortisseur, dans la position déployée lorsqu'une force inférieure à un effort prédéterminé est exercée sur l'amortisseur. Une force inférieure à l'effort prédéterminé est par exemple exercée sur l'amortisseur lorsqu'aucun effort n'est appliqué à la roue, à savoir qu'aucun effort autre que ceux dus à l'accélération de la gravité terrestre ne s'applique sur la roue. Ainsi, la bielle est désalignée de l'amortisseur dans la position déployée lorsque l'aéronef équipé de l'atterrisseur est en vol. La bielle est également désalignée de l'amortisseur dans la position déployée lorsque l'aéronef équipé de l'atterrisseur est posé au sol de façon statique, à savoir immobile, la force exercée sur l'amortisseur étant alors inférieure à l'effort prédéterminé.

Lorsque l'aéronef équipé de l'atterrisseur est en vol ou statique au sol, la tige de l'amortisseur est dans une position qualifiée de « médiane » par rapport au corps de l'amortisseur, c'est à dire que la tige n'est pas en butée dans le corps, et peut alors se déplacer aussi bien pour rentrer dans le corps que pour sortir du corps en fonction des efforts qui peuvent être appliqués à la roue. Lorsqu'une force inférieure à un effort prédéterminé est exercée sur l'amortisseur, l'amortisseur peut ainsi être étendu et comprimé.

La bielle et l'amortisseur forment ainsi un angle supérieur à 0 degré (0°), et plus précisément compris entre 0 degré (0°) et 180 degrés (180°), lorsqu'une force inférieure à un effort prédéterminé est exercée sur l'amortisseur.

Ce désalignement de la bielle par rapport à l'amortisseur permet avantageusement d'assurer une mise en traction de la contrefiche garantissant un verrouillage efficace du contreventement principal formé par l'amortisseur et la bielle sur toute la plage de compression de l'amortisseur et, par suite, un verrouillage efficace de la position déployée de la roue de l'atterrisseur selon l'invention.

La cinématique de l'atterrisseur, et en particulier la cinématique du balancier et de la bielle, permettent également de réduire progressivement ce désalignement de la bielle par rapport à l'amortisseur lorsque l'amortisseur se comprime, la force exercée sur l'amortisseur augmentant, par exemple lors d'un contact de la roue avec le sol pendant un atterrissage et lorsque la cellule de l'aéronef se rapproche du sol durant cet atterrissage. Cette réduction du désalignement se caractérise par une augmentation de l'angle précité entre la bielle et l'amortisseur et permet de limiter les efforts tranchants dans l'amortisseur. La limitation de ces efforts tranchants dans l'amortisseur induit par exemple la réduction des frottements entre la tige et le corps de l'amortisseur lors de la compression de l'amortisseur ce qui améliore ainsi le fonctionnement, le rendement et l'efficacité de l'amortisseur.

De plus, le verrouillage de la contrefiche, reliant la structure à l'amortisseur, à l'aide du dispositif de verrouillage, dans la position déployée de la roue, permet d'empêcher tout mouvement angulaire de l'amortisseur lors de sa compression. Cette caractéristique permet avantageusement de maintenir un bras de levier constant entre l'amortisseur et un axe de rotation du balancier par rapport à la structure de l'aéronef, assurant ainsi un avantage mécanique, sensiblement constant sur toute la course de compression de l'amortisseur, en particulier lors d'un atterrissage de l'aéronef.

Le verrouillage de la contrefiche, dans la position déployée de la roue, est assuré par l'effort de traction généré par l'organe de rappel élastique sur cette contrefiche et par la présence du dispositif de butée. En effet, le dispositif de butée permet de limiter le débattement angulaire de la première biellette et de la seconde biellette autour de l'axe de rotation de la première liaison mécanique sous l'action de l'effort de traction de l'organe de rappel élastique et d'arrêter un déplacement angulaire relatif de la première biellette et de la seconde biellette selon un sens autour de l'axe de rotation de la première liaison mécanique lorsque le débattement angulaire maximum est atteint.

Ce verrouillage de la contrefiche empêche avantageusement une rétraction non désirée, par exemple lorsque l'atterrisseur est soumis à des vibrations, à des chocs, à des accélérations et à des efforts au sol, dans des limites prédéfinies. L'actionneur permet de déverrouiller la contrefiche en s'opposant à l'effort de traction généré par l'organe de rappel et en déplaçant la seconde biellette, afin de déplacer la roue de la position déployée vers la position rétractée.

L'organe de rappel élastique est ainsi dimensionné de sorte que ce verrouillage résiste à ces vibrations, à ces chocs, à ces accélérations et à ces efforts au sol, dans les limites prédéfinies. L'organe de rappel élastique peut comprendre par exemple un ressort hélicoïdal sollicité en traction.

La présence de ce verrouillage permet également de ne pas introduire de couple ou d'effort dans l'actionneur lorsque la roue est dans la position déployée. L'actionneur n'est ainsi pas sollicité en permanence augmentant de façon significative sa durée de vie grâce à l'invention.

De plus, ce verrouillage de la contrefiche, combiné au double contreventement permet avantageusement de ne plus solliciter l'actionneur une fois la roue dans la position déployée et la contrefiche verrouillée. L'actionneur n'exerce alors aucun effort ou couple sur la seconde biellette, et sa consommation d'énergie électrique est limitée, voire nulle.

En outre, le maintien de la roue dans la position rétractée peut être obtenu par exemple par l'intermédiaire de l'actionneur. L'actionneur peut appliquer sur la contrefiche un effort ou un couple suffisant pour ce maintien et s'opposant notamment aux poids de la roue et du balancier. La cinématique de l'atterrisseur et l'agencement de l'organe de rappel élastique, sont avantageusement définis de sorte à réduire l'effort ou le couple requis au niveau de l'actionneur pour maintenir la roue dans la position rétractée. Alternativement ou de manière complémentaire, un organe de blocage peut bloquer l'actionneur lorsque la roue est dans ladite position rétractée.

De même, cette cinématique de l'atterrisseur et l'agencement de l'organe de rappel élastique sont avantageusement définis de sorte à réduire l'effort ou le couple requis pour déplacer la roue entre les positions rétractée et déployée.

De plus, la cinématique innovante de l'atterrisseur selon l'invention permet avantageusement la réalisation d'un déploiement de secours de la roue par gravité de la position rétractée vers la position déployée, par exemple en cas de panne ou de dysfonctionnement de l'actionneur.

L'atterrisseur selon l'invention peut comporter une ou plusieurs des caractéristiques qui suivent, prises seules ou en combinaison.

Selon un exemple, le dispositif de butée peut comporter une première butée agencée sur la première biellette et une seconde butée agencée sur la seconde biellette. La première butée et la seconde butée sont en contact l'une contre l'autre lorsque la roue est dans la position déployée et sous l'effort de traction généré par l'organe de rappel élastique. La première butée et la seconde butée permettent ainsi conjointement de limiter le débattement angulaire de la première biellette et de la seconde biellette autour de l'axe de rotation de la première liaison mécanique sous l'action de l'organe de rappel élastique.

Alternativement, le dispositif de butée peut comporter une butée agencée sur la première biellette et entrant en contact avec la seconde biellette sous l'action de l'organe de rappel élastique de sorte à limiter le débattement angulaire de la première biellette et de la seconde biellette autour de l'axe de rotation de la première liaison mécanique.

Alternativement ou de façon complémentaire, le dispositif de butée peut comporter une butée agencée sur la seconde biellette et entrant en contact avec la première biellette sous l'action de l'organe de rappel élastique de sorte à limiter le débattement angulaire de la première biellette et de la seconde biellette autour de l'axe de rotation de la première liaison mécanique.

Alternativement, le dispositif de butée peut comporter une première butée agencée sur la première biellette et entrant en contact avec l'amortisseur sous l'action de l'organe de rappel élastique de sorte à limiter le débattement angulaire de la première biellette par rapport à l'amortisseur, et une seconde butée agencée sur la seconde biellette et entrant en contact avec la structure ou l'actionneur sous l'action de l'organe de rappel élastique de sorte à limiter le débattement angulaire de la seconde biellette par rapport à la structure. Alternativement, la première butée peut être agencée sur l'amortisseur et entrer en contact avec la première biellette. Alternativement, la seconde butée peut être agencée sur la structure ou l'actionneur et entrer en contact avec la seconde biellette.

Selon un autre exemple compatible avec les précédents, l'actionneur peut être un moteur électrique rotatif. La seconde biellette est alors reliée à un arbre de sortie tournant du moteur électrique, une partie fixe du moteur électrique étant reliée à la structure de l'aéronef. Par exemple, une première extrémité de la seconde biellette est solidaire d'un tel arbre de sortie tournant du moteur électrique, la seconde extrémité de la seconde biellette étant reliée à la première biellette par l'intermédiaire de la première liaison mécanique. Ainsi, le moteur électrique provoque une rotation de la seconde biellette autour de sa première extrémité, et par suite un déplacement de la première biellette, et de la roue, pour déplacer la roue de la position rétractée à la position déployée, et inversement.

L'utilisation d'un tel moteur électrique rotatif comme actionneur simplifie l'implantation de l'atterrisseur selon l'invention par rapport à un atterrisseur de l'art antérieur utilisant par exemple un vérin hydraulique. De plus, la consommation énergétique d'un tel moteur électrique rotatif est réduite et son utilisation est possible grâce à la cinématique particulière de l'atterrisseur selon l'invention qui nécessite des couples réduits de manœuvre pour déplacer la roue entre les positions rétractée et déployée ainsi qu'un couple réduit pour maintenir la roue dans la position rétractée. L'utilisation d'un tel moteur électrique rotatif comme actionneur autorise également un déplacement angulaire important de la seconde biellette, par exemple supérieur à 90°, voire proche de 180°, qui, combiné à la cinématique de l'atterrisseur permet d'obtenir un encombrement faible de l'atterrisseur lorsque la roue est dans la position rétractée.

Avantageusement, l'utilisation d'un tel moteur électrique comme actionneur peut permettre, lors d'un déploiement de secours de la roue par gravité, le contrôle de la vitesse de déploiement de la roue par une mise en court-circuit du moteur électrique qui fait alors office de frein.

Alternativement, l'actionneur peut être un vérin linéaire électrique, pneumatique, voire hydraulique, articulé à la structure de l'aéronef et à la seconde biellette, une première extrémité de la seconde biellette étant articulée à la structure et la seconde extrémité de la seconde biellette étant reliée à la première biellette par l'intermédiaire de la première liaison mécanique. De la sorte, ce vérin provoque une rotation de la seconde biellette autour de sa première extrémité, et par suite un déplacement de la première biellette, de l'amortisseur, de la bielle et du balancier, pour déplacer la roue de la position rétractée à la position déployée, et inversement.

Selon un autre exemple compatible avec les précédents, la bielle peut être articulée à la tige et la première biellette peut être articulée au corps, le corps étant articulé à la structure.

Alternativement, la bielle peut être articulée au corps et la première biellette peut être articulée à la tige, la tige étant articulée à la structure.

Selon un autre exemple compatible avec les précédents, un axe de rotation de la première biellette par rapport à l'amortisseur et un axe de rotation de la seconde biellette par rapport à la structure peuvent former plan sensiblement horizontal, la roue étant dans la position déployée, un tel plan horizontal étant perpendiculaire à une direction de la gravité terrestre. L'axe de rotation de la seconde biellette par rapport à la structure est par exemple l'axe de rotation de l'actionneur lorsque l'actionneur est un moteur électrique rotatif.

Cette implantation des axes de rotation de la première biellette par rapport à l'amortisseur et de la seconde biellette par rapport à la structure permet de minimiser les efforts de manœuvre de l'atterrisseur, notamment pour déplacer la roue de la position déployée à la position rétractée, et inversement, le bras de levier entre la contrefiche secondaire et la liaison mécanique entre l'amortisseur et la structure étant maximisé.

Selon un autre exemple compatible avec les précédents, un axe de rotation de la première biellette par rapport à l'amortisseur, un axe de rotation de la seconde biellette par rapport à la structure et l'axe de rotation de la première biellette par rapport à la seconde biellette peuvent être parallèles entre eux et coplanaires lorsque la roue est dans la position déployée. Le dispositif de butée peut être configuré pour permettre un tel alignement dans la position déployée.

Ce parallélisme et cette coplanarité des trois axes de rotation précités contribuent à minimiser les efforts de manœuvre de l'actionneur de l'atterrisseur, notamment pour déplacer la roue de la position déployée à la position rétractée, et inversement.

De la sorte, lorsque la première biellette et la seconde biellette sont droites, la première biellette et la seconde biellette sont alignées dans la position déployée. L'angle entre la première biellette et la seconde biellette autour de l'axe de rotation de la première liaison mécanique est dans ce cas sensiblement égal à 180°.

Selon un autre exemple compatible avec les précédents, l'organe de rappel élastique peut être fixé par une de ses extrémités à la première biellette, à la seconde biellette ou à la première liaison mécanique. L'organe de rappel élastique est de préférence fixé directement à la première liaison mécanique. L'organe de rappel élastique peut aussi être fixé à la première biellette ou à la seconde biellette, ce point de fixation étant situé à proximité de la première liaison mécanique. L'autre extrémité de l'organe de rappel élastique peut être fixée à la troisième liaison mécanique entre le balancier et la bielle, au balancier ou à la bielle. Cette implantation de l'organe de rappel élastique permet de minimiser les efforts de manœuvre de l'actionneur pour déplacer la roue de la position déployée à la position rétractée, et inversement.

Selon un autre exemple compatible avec les précédents, une première longueur de la première biellette peut être supérieure à une seconde longueur de la seconde biellette.

Ces dimensions de la première biellette et de la seconde biellette permettent également de minimiser les efforts de manœuvre de l'atterrisseur. La première longueur de la première biellette peut être définie entre deux extrémités de la première biellette, selon une direction passant par les axes de rotation de la première biellette par rapport respectivement à l'amortisseur et à la seconde biellette. La seconde longueur de la seconde biellette peut être définie entre deux extrémités de la seconde biellette, selon une direction passant par les axes de rotation de la seconde biellette par rapport respectivement à la structure et à la première biellette.

Par exemple, la seconde longueur de la seconde biellette peut être comprise entre un quart (1/4) et un cinquième (1/5) de la première longueur de la première biellette.

Selon un autre exemple compatible avec les précédents, la bielle peut être droite et alignée avec l'amortisseur lorsque l'amortisseur est comprimé sous une force égale à l'effort prédéterminé, la roue étant dans la position déployée. Lorsqu'une telle force égale à l'effort prédéterminé est exercée sur l'amortisseur, l'amortisseur se comprime de sorte que la tige est rentrée presque complètement dans le corps.

Un effort important peut parfois être appliqué sur la roue et transmis au moins partiellement, via la bielle, à l'amortisseur. Un tel effort important est par exemple exercé sur la roue par le sol lors d'un atterrissage. Sous l'action de cet effort important, l'amortisseur se comprime, éventuellement presque complètement, à savoir que la tige peut arriver en appui contre une butée de fin de course agencée dans le corps lorsque la force exercée sur l'amortisseur est sensiblement égale, voire supérieure, à l'effort prédéterminé.

La cinématique de l'atterrisseur selon l'invention est définie afin que la bielle, qui peut être droite, soit alignée avec l'amortisseur lorsque l'amortisseur est comprimé sous l'effet d'une force sensiblement égale à cet effort prédéterminé. De la sorte, la bielle peut transmettre à l'amortisseur la majorité de cet effort important dû à la réaction du sol sur la roue afin que l'amortisseur absorbe et dissipe au maximum cet effort important pour protéger la bielle et/ou la structure de l'aéronef.

Alternativement, la bielle peut rester désalignée de l'amortisseur lorsque l'amortisseur est comprimé sous une force égale à l'effort prédéterminé, la roue étant dans la position déployée. L'angle précédemment cité entre la bielle et l'amortisseur est alors très proche de 180° tout en restant strictement inférieur à 180° et est par exemple compris entre 175° et 180°.

Selon un autre exemple compatible avec les précédents, l'amortisseur peut comporter une butée de fin de course déformable agencée dans le corps, la butée de fin de course étant configurée pour se déformer lorsque l'amortisseur se comprime sous l'effet d'une force supérieure à l'effort prédéterminé, la roue étant dans la position déployée.

La butée de fin de course peut ainsi se déformer sous l'effet d'une force supérieure à l'effort prédéterminé.

La butée de fin de course déformable agit ainsi en tant que fusible pour dissiper une partie de l'énergie transmise à la roue, et par suite à l'amortisseur, par exemple lors d'un atterrissage dénommé usuellement « atterrissage dur ».

Par exemple, la butée de fin de course déformable comporte un tube formant un corps creux et configuré pour flamber à partir d'une force exercée sur l'amortisseur, supérieure ou égale à l'effort prédéterminé.

Selon un autre exemple compatible avec les précédents, l'atterrisseur peut comporter un levier, le levier étant configuré pour être en contact avec la première biellette lorsque l'amortisseur est comprimé sous l'effet d'une force sensiblement égale à l'effort prédéterminé, la roue étant dans la position déployée. Le levier est alors en contact avec la première biellette sans provoquer de déplacement de la première biellette. Le levier est ainsi agencé de sorte à provoquer un déplacement de la première biellette lorsque l'amortisseur se comprime sous l'effet d'une force supérieure à l'effort prédéterminé.

Le levier peut alternativement être très proche de la première biellette, sans être en contact contre la première biellette, lorsque l'amortisseur subit une force sensiblement égale à l'effort prédéterminé. Le levier entre en contact, puis déplace la première biellette dès que l'amortisseur se comprime sous l'effet d'une force supérieure à l'effort prédéterminé.

Lorsque l'amortisseur se comprime sous l'effet d'une force supérieure à l'effort prédéterminé, le levier provoque ainsi un déplacement de la première biellette par rapport à l'amortisseur, ce qui provoque un déplacement de la seconde biellette autour de l'axe de rotation de la première liaison mécanique. La contrefiche est alors déverrouillée. La roue peut alors s'effacer.

L'effort prédéterminé et l'amortisseur sont par exemple définis afin que l'atterrisseur soit déverrouillé et que la roue ne soit plus dans la position déployée avant que les capacités maximales d'absorption d'énergie de l'amortisseur ne soient atteintes. L'effort prédéterminé est donc inférieur ou égal à un effort maximal que l'amortisseur est capable d'absorber.

Ce déverrouillage de la contrefiche, qui peut être désigné par le terme « effacement », permet d'écrêter les efforts que doit absorber l'amortisseur. Cet effacement de la contrefiche, et le déverrouillage de la position déployée de la roue qui s'en suit, évite avantageusement qu'une partie trop importante de l'effort appliqué à la roue ne soit transmise à la structure de l'aéronef, limitant, voire évitant, l'apparition de dégradations de cette structure ou de l'atterrisseur lui-même.

Par ailleurs, le levier peut être agencé sur la bielle ou sur la tige lorsque la bielle est articulée à la tige ou sur le corps lorsque la bielle est articulée au corps.

De plus, lorsque l'amortisseur comporte une butée de fin de course déformable agencée dans le corps, telle que précédemment décrite, le levier peut être configuré pour être très proche, voire en contact avec la première biellette lorsque la tige est en appui contre la butée de fin de course.

De plus, l'amortisseur peut comporter une valve configurée pour mettre en communication un espace intérieur situé dans le corps et un milieu extérieur situé en dehors du corps, la valve s'ouvrant lorsqu'une pression régnant dans le corps est supérieure à une pression prédéterminée. La valve évite ainsi une augmentation trop importante de la pression dans le corps de l'amortisseur, lorsqu'une force supérieure ou égale à l'effort prédéterminé est exercée sur l'amortisseur. Une augmentation trop importante de la pression dans le corps peut par exemple empêcher que la tige soit en appui contre une butée de fin course déformable. Selon un autre exemple, l'amortisseur peut comporter une valve configurée pour mettre en communication les chambres de part et d'autre d'un diaphragme de laminage de l'amortisseur permettant d'écrêter les efforts de laminage au-delà d'une valeur prédéfinie.

La présente invention vise également un aéronef comportant un ou plusieurs atterrisseurs tels que décrits précédemment.

Cet aéronef peut comporter par exemple trois atterrisseurs ainsi que trois logements dans lesquels sont respectivement rétractés et rangés au moins partiellement ces atterrisseurs.

L'invention et ses avantages apparaîtront avec plus de détails dans le cadre de la description qui suit avec des exemples donnés à titre illustratif en référence aux figures annexées qui représentent :
- la figure 1, un atterrisseur selon l'invention dans la position déployée de la roue,
- la figure 2, l'atterrisseur de la figure 1 dans la position rétractée de la roue,
- la figure 3, l'atterrisseur de la figure 1 dans la position déployée de la roue avec l'amortisseur comprimée,
- la figure 4, une butée de fin de course de l'amortisseur de l'atterrisseur de la figure 1 dans la position rétractée, et
- les figures 5 à 8, l'atterrisseur de la figure 1 dans la position déployée.

Les éléments présents dans plusieurs figures distinctes sont affectés d'une seule et même référence.

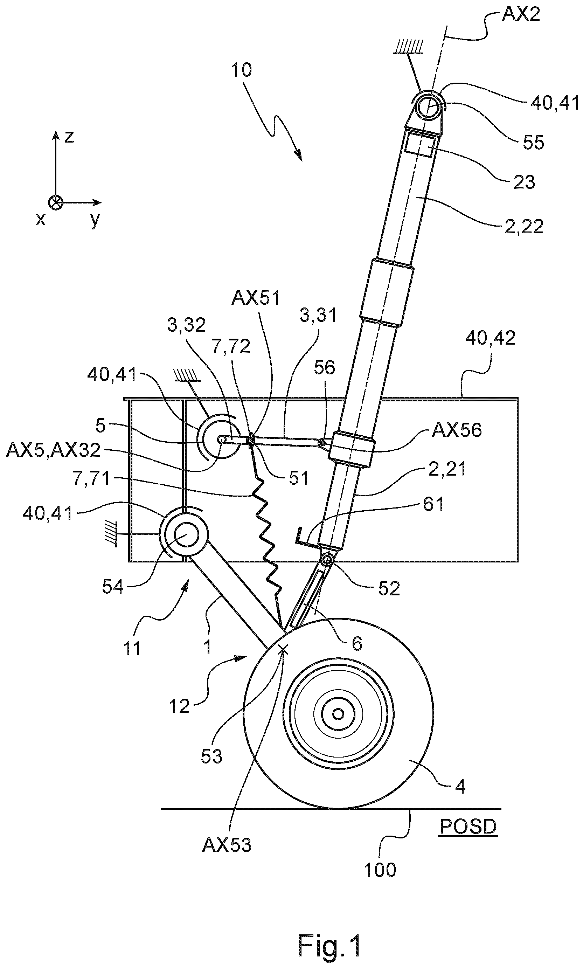

Un atterrisseur 10 rétractable selon l'invention est représenté sur les figures 1 à 8, l'atterrisseur 10 étant relié à une structure 41 d'un aéronef 40.

Un repère orthogonale (X,Y,Z) est représenté sur les figures. Une direction d'élévation Z s'étend de bas en haut, parallèlement à la direction de la gravité terrestre. Une direction X et une direction Y s'étendent perpendiculairement à la direction d'élévation Z et perpendiculairement entre elles. Le plan (X,Y) forme ainsi un plan horizontal, à savoir perpendiculaire à la direction de la gravité terrestre, et les directions X et Y forment quant à elles des directions horizontales.

Un aéronef 40 peut comporter un train d'atterrissage comportant un ou plusieurs atterrisseurs 10. Un train d'atterrissage d'un aéronef 40 peut par exemple comporter trois atterrisseurs 10.

Un atterrisseur 10 rétractable selon l'invention comporte au moins une roue 4, et un balancier 1 s'étendant d'une première zone extrémale 11 articulée à la structure 41 par une liaison dite « quatrième liaison mécanique 54 », vers une seconde zone extrémale 12 portant la ou les roues 4. Pour déplacer le balancier 1, l'atterrisseur 10 rétractable comporte en outre un actionneur 5 relié à la structure 41.

L'atterrisseur 10 rétractable comporte un amortisseur 2 muni d'une tige 21 coulissant dans un corps 22. L'amortisseur 2 est relié au balancier 1 par une bielle 6. Une extrémité de la tige 21 peut être articulée à la bielle 6 par une liaison dite « deuxième liaison mécanique 52 », une extrémité du corps 22 étant articulée à la structure 41 par une liaison dite « cinquième liaison mécanique 55 » comme représenté sur les figures. Alternativement, la tige 21 peut être articulée à la structure 41, le corps 22 étant articulé à la bielle 6.

La bielle 6 est aussi articulée au balancier 1 par une liaison dite « troisième liaison mécanique 53 ».

La bielle 6 est agencée de sorte à être désalignée de l'amortisseur 2 lorsqu'une force inférieure à un effort prédéterminé est exercée sur l'amortisseur 2, la roue 4 étant dans la position déployée POSD.

La bielle 6 et l'amortisseur 2 forment alors un angle strictement supérieur à 0° et strictement inférieur à 180°. La roue 4 de l'atterrisseur 10 n'est dans ce cas soumise à aucun autre effort autre que ceux dus à l'accélération de la gravité terrestre, l'aéronef 40 étant en vol ou au sol.

L'atterrisseur 10 rétractable comporte une contrefiche 3 munie d'une première liaison mécanique 51 ayant au moins un degré de liberté en rotation, d'une première biellette 31 et d'une seconde biellette 32 articulées entre elles par la première liaison mécanique 51. Par exemple, la première liaison mécanique 51 peut être une liaison de type rotule ayant trois degrés de liberté en rotation. Alternativement, la première liaison mécanique 51 peut être une liaison de type pivot et comporter une tige traversant des orifices agencés dans la première biellette 31 et dans la seconde biellette 32. Alternativement, la première liaison mécanique 51 peut être une liaison de type cardan.

La première biellette 31 est aussi articulée à l'amortisseur 2 par une liaison dite « sixième liaison mécanique 56 » alors que la seconde biellette 32 est reliée à l'actionneur 5. Selon l'exemple représenté sur les figures, la première biellette 31 est articulée au corps 22 de l'amortisseur 2.

Les troisième, quatrième, cinquième et sixième liaisons mécaniques 53-56 comportent au moins un degré de liberté en rotation, voire trois degrés de liberté en rotation. Par exemple, les troisième, quatrième, cinquième et sixième liaisons mécaniques peuvent comporter chacune une unique liaison de type pivot. Dans ce cas, les première, deuxième, troisième, quatrième, cinquième et sixième liaisons mécaniques autorisent chacune une rotation autour d'axes de rotation parallèles entre eux, et parallèles à la direction X selon l'exemple représenté sur les figures.

Alternativement, les première, troisième, quatrième, cinquième et sixième liaisons mécaniques peuvent comporter chacune une liaison de type rotule ou de type cardan.

La deuxième liaison mécanique 52 comporte quant à elle un unique degré de liberté en rotation et est par exemple de type pivot. Cet unique degré de liberté autorise une rotation autour d'un unique axe parallèle à la direction X selon l'exemple représenté sur les figures.

Par ailleurs, l'atterrisseur 10 rétractable comporte un dispositif de verrouillage 7 comportant un organe de rappel élastique 71 et un dispositif de butée 72. L'organe de rappel élastique 71 comporte deux extrémités fixées respectivement à la contrefiche 3 et à un ensemble articulé comportant le balancier 1, la bielle 6, et la troisième liaison mécanique 53. L'organe de rappel élastique 71 peut ainsi générer un effort de traction entre la contrefiche 3 et l'ensemble articulé. L'organe de rappel élastique 71 peut être par exemple un ressort hélicoïdal sollicité en traction.

L'organe de rappel élastique 71 peut par exemple être fixé par une de ses extrémités à la première biellette 31, à la seconde biellette 32 ou à la première liaison mécanique 51. L'organe de rappel élastique 71 est de préférence fixé directement à la première liaison mécanique 51 ou à la première biellette 31 à proximité de la première liaison mécanique 51 ou à la seconde biellette 32 à proximité de la première liaison mécanique 51.

L'autre extrémité de l'organe de rappel élastique 71 peut être fixée à l'ensemble articulé, et plus précisément à la troisième liaison mécanique 53, au balancier 1 ou à la bielle 6. Lorsque l'organe de rappel élastique 71 est fixé au balancier 1 ou à la bielle 6, le point de fixation de l'organe de rappel élastique 7 peut être situé à proximité de la troisième liaison mécanique 53.

Le dispositif de butée 72 peut comporter une ou plusieurs butées 35,36 afin d'arrêter un déplacement relatif en rotation entre les première et seconde biellettes 31,32 autour d'un axe de rotation AX51 de la première liaison mécanique 51 provoqué par l'effort de traction généré par l'organe de rappel élastique 71.

Le dispositif de butée 72 peut selon l'exemple représenté comporter une première butée 35 sur la première biellette 31 et une seconde butée 36 sur la seconde biellette 32. La première butée 35 et la seconde butée 36 peuvent ainsi être en contact l'une contre l'autre par l'application de cette force de traction générée par l'organe de rappel élastique 71 dans la position déployée POSD et limiter ainsi l'amplitude du déplacement relatif en rotation de la première biellette 31 et de la seconde biellette 32 autour de l'axe AX51 de rotation de la première liaison mécanique 51.

Alternativement, le dispositif de butée 72 peut comporter par exemple une butée qui peut être agencée sur la première biellette 31 et entrer en contact avec la seconde biellette 32 sous l'action de l'organe de rappel élastique 71 ou inversement qui peut être agencée sur la seconde biellette 32 et entrer en contact avec la première biellette 31 sous l'action de l'organe de rappel élastique 71.

Alternativement, le dispositif de butée 72 peut aussi comporter une première butée limitant le déplacement de la première biellette 31 par rapport à l'amortisseur 2 et une seconde butée limitant le déplacement de la seconde biellette 32 par rapport à la structure 41 ou à l'actionneur 5 sous l'action de l'organe de rappel élastique 71.

Par ailleurs, l'actionneur 5 est ainsi relié d'une part à la structure 41 et d'autre part à la seconde biellette 32 afin d'entraîner en rotation la seconde biellette 32 par rapport à la structure 41. L'actionneur 5 permet alors de déplacer la roue 4 entre une position déployée POSD et une position rétractée POSR.

Selon l'exemple représenté sur les figures, l'actionneur 5 est un moteur électrique. Alternativement, l'actionneur 5 peut être un vérin.

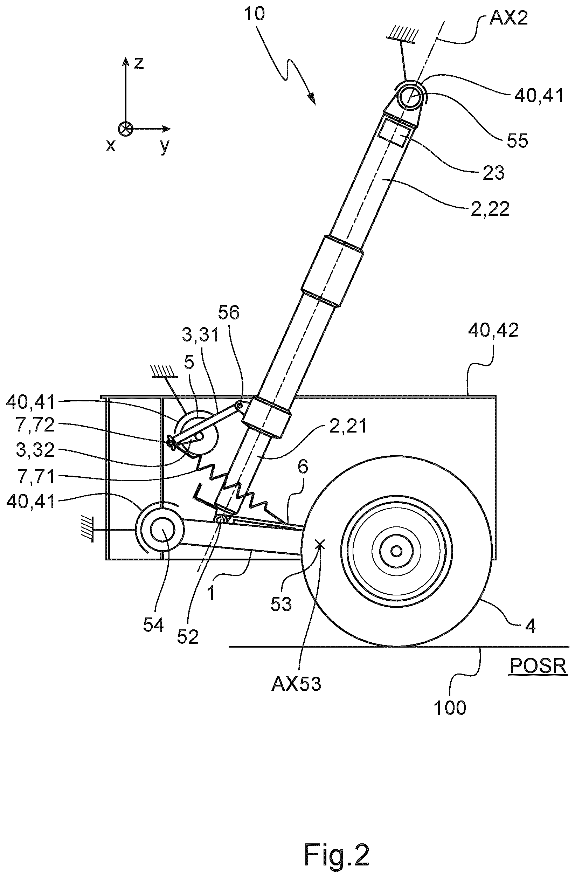

Dans la position rétractée POSR de la roue 4, l'atterrisseur 10 est positionné partiellement ou totalement dans un logement 42 de l'aéronef 40. Sur la figure 2, l'atterrisseur 10 est représenté dans un mode de réalisation où il est partiellement escamoté dans le logement 42. La roue 4 est dans la position rétractée POSR lors d'un vol de l'aéronef 40 afin notamment de réduire la traînée aérodynamique générée par l'atterrisseur 10 lors de l'avancement de l'aéronef 40 en vol.

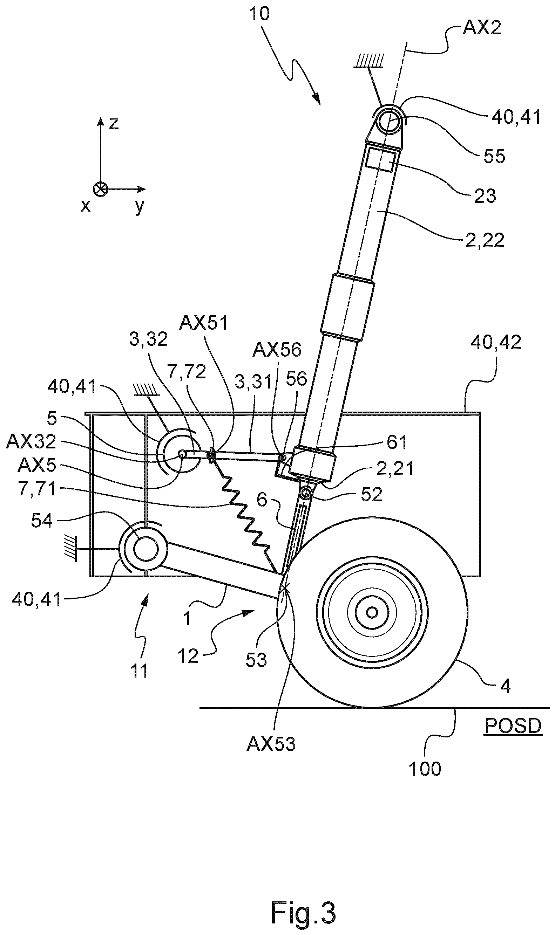

Dans la position déployée POSD, la roue 4 de l'atterrisseur 10 peut être positionnée totalement en dehors du logement 42 comme représenté sur la figure 1, la roue 4 étant en contact avec le sol 100. La roue 4 est dans la position déployée POSD, lorsque l'aéronef 40 est au sol ainsi qu'avant une phase d'atterrissage et après un décollage. Sur la figure 1 ainsi que sur les figures 3 et 5 à 8, l'atterrisseur 10 repose sur un sol 100 horizontal.

L'atterrisseur 10 permet ainsi d'une part le roulage de l'aéronef 40 sur le sol 100 et d'autre part l'amortissement d'un atterrissage de l'aéronef 40 sur le sol 100, notamment grâce à l'amortisseur 2 et à la cinématique particulière de l'atterrisseur 10 selon l'invention.

L'atterrisseur 10 comporte ainsi une architecture particulière comportant deux contreventements complémentaires contribuant ensemble à maintenir efficacement la roue 4 dans la position déployée POSD lorsque l'atterrisseur 10 subit diverses sollicitations telles que des vibrations, des chocs, des accélérations et des efforts au sol, en restant dans des limites prédéfinis. L'atterrisseur 10 comporte en effet, dans la position déployée POSD, un contreventement principal du balancier 1 formé par l'amortisseur 2, la bielle 6 et la troisième liaison mécanique 53 et un contreventement secondaire de l'amortisseur 2 formé par la contrefiche 3, et donc la première biellette 31, la seconde biellette 32 et la première liaison mécanique 51.

L'implantation de l'organe de rappel élastique 71 associé à l'architecture de l'atterrisseur 10 permet de plus d'assurer un verrouillage de la contrefiche 3, et donc du contreventement secondaire pour résister à ces différentes sollicitations. De plus, le désalignement de la bielle 6 par rapport à l'amortisseur 2 assure une mise en traction de la contrefiche 3 garantissant ainsi un verrouillage efficace de la position déployée POSD de la roue 4.

Cette implantation de l'organe de rappel élastique 71 associée à l'architecture de l'atterrisseur 10 permet également de minimiser les efforts de manœuvre que doit appliquer l'actionneur 5 pour déplacer la roue 4 entre les positions déployée POSD et rétractée POSR. Cela permet ainsi l'utilisation d'un moteur électrique comme actionneur 5, voire d'un petit vérin, par exemple électrique ou pneumatique.

En outre, une fois la roue 4 dans la position déployée POSD et la contrefiche 3 verrouillée, l'actionneur 5 peut être désactivé, à savoir peut être piloté pour ne fournir aucun effort ou couple sur la seconde biellette 32. En effet, le verrouillage de la contrefiche 3 permet avantageusement, grâce à l'utilisation des contreventements principal et secondaire de maintenir efficacement la roue 4 dans la position déployée, sans que l'actionneur 5 ne fournisse d'effort ou de couple.

De plus, la première biellette 31 et la seconde biellette 32 peuvent avoir des longueurs différentes. En particulier, une première longueur de la première biellette 31 peut être supérieure à une seconde longueur de la seconde biellette 32 conformément à l'exemple représenté sur les figures. Ces différences de longueurs des première et seconde biellettes 31,32 contribuent à minimiser les efforts de manœuvre de l'actionneur 5 pour déplacer la roue 4 entre la position déployée POSD et la position rétractée POSR.

En outre, pour l'exemple représenté, l'axe de rotation AX32 de la seconde biellette 32 par rapport à la structure 41 est confondu avec l'axe de rotation AX5 du moteur électrique constituant l'actionneur 5 et ces axes de rotation AX31,AX56 forment un plan perpendiculaire à la direction Z.

Alternativement, l'axe de rotation AX56 de la sixième liaison mécanique 56 et l'axe de rotation AX32 de la seconde biellette 32 par rapport à la structure 41 peuvent former un plan perpendiculaire à un axe de débattement AX2 de l'amortisseur 2 dans la position déployée POSD.

De plus, ces axes de rotation AX56,AX32 de la première biellette 31 par rapport à l'amortisseur 2 et de la seconde biellette 32 par rapport à la structure 41 peuvent aussi être sensiblement coplanaires avec l'axe de rotation AX51 de la première liaison mécanique 51 dans la position déployée POSD. De la sorte, lorsque la première biellette 31 et la seconde biellette 32 sont droites, elles sont alignées.

L'architecture de l'atterrisseur 10 peut être définie de sorte que l'axe de rotation de la bielle 6 par rapport au balancier 1, à savoir l'axe de rotation AX53 de la troisième liaison mécanique 53, soit aligné avec l'axe de débattement AX2 de l'amortisseur 2 lorsque l'amortisseur 2 est comprimé sous l'effet d'une force sensiblement égale à un effort prédéterminé et la roue 4 est dans la position déployée POSD. L'axe de débattement AX2 de l'amortisseur 2 peut être un axe de translation de la tige 21 par rapport au corps 22. Dans cette configuration, lorsque la bielle 6 est droite, la bielle 6 est alignée avec cet axe de débattement de l'amortisseur 2. L'amortisseur 2 est ainsi comprimé lorsque qu'un effort important et dirigé en parti verticalement et vers le haut est appliqué à la roue 4. Un tel effort important peut être appliqué à la roue 4 lors d'un atterrissage dur de l'aéronef 40 notamment.

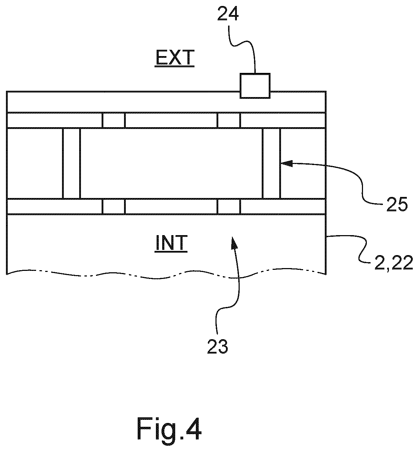

L'amortisseur 2 peut aussi comporter une butée de fin de course 23 déformable agencé dans le corps 22. Cette butée de fin de course 23 est positionnée dans le corps 22 et configurée pour se déformer lorsque l'amortisseur 2 se comprime sous l'effet d'une force supérieure à l'effort prédéterminé. La butée de fin de course 23 peut par exemple comporter un tube 25 comme représenté sur la figure 4, le tube 25 étant défini et dimensionné pour se déformer, par exemple par flambage, à partir d'une force supérieure à l'effort prédéterminé exercée sur l'amortisseur 2.

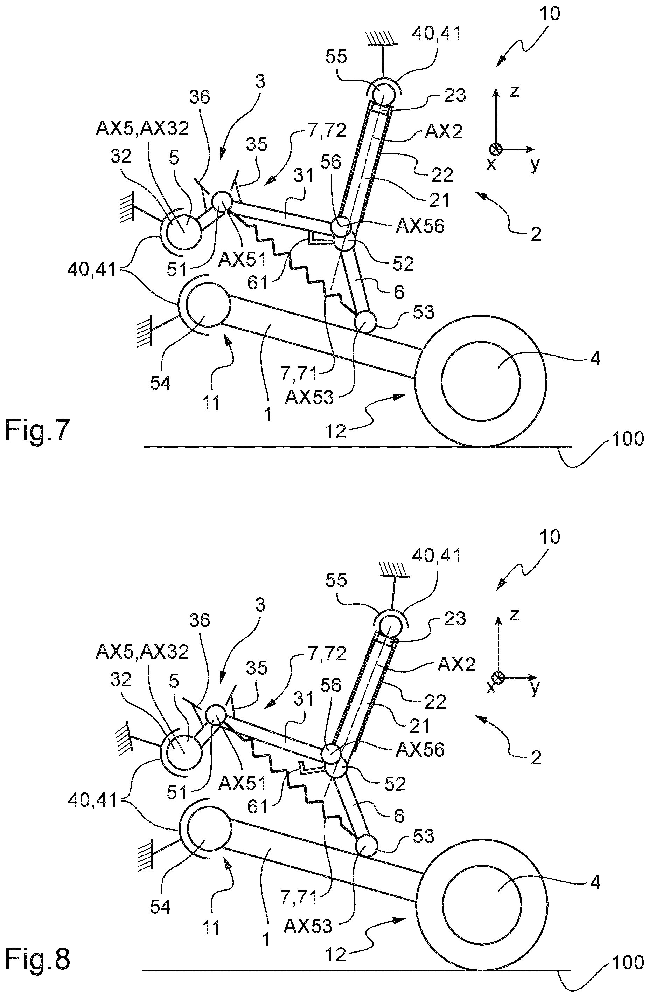

La butée de fin de course 23 peut se déformer directement sous une force appliquée par la tige 21 sur la butée de fin de course 23, la tige 21 étant alors en appui contre la butée de fin de course 23 comme représenté sur la figure 7.

La butée de fin de course 23 peut alternativement se déformer sous une force appliquée par un fluide présent dans le corps 22 et comprimé par la tige 21, la tige 21 n'étant alors pas en contact avec la butée de fin de course 23.

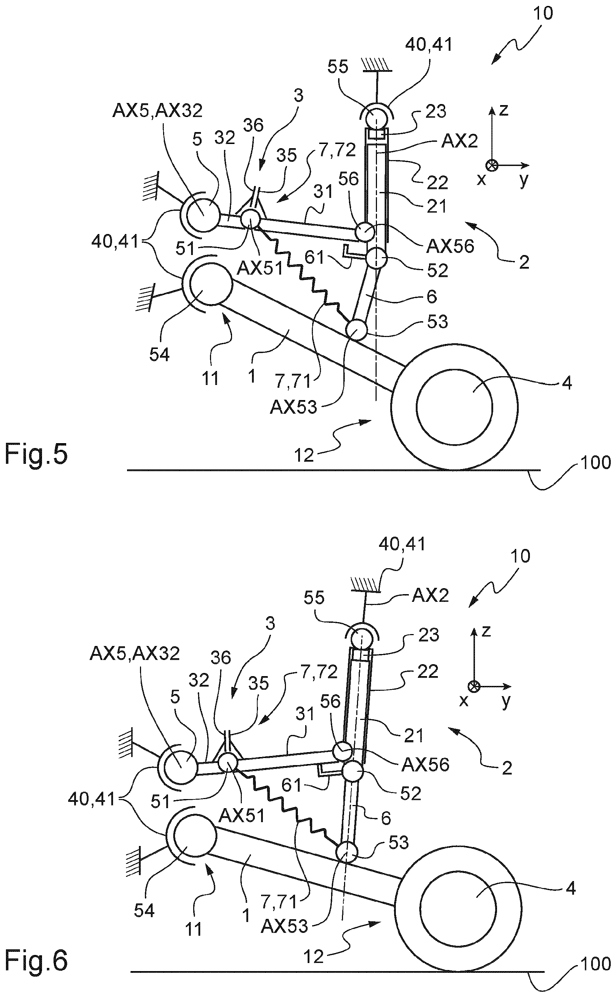

L'atterrisseur 10 peut aussi comporter un levier 61, comme représenté sur les figures 5 à 8. Le levier 61 est par exemple solidaire de la bielle 6 et configuré pour être très proche, voire en contact avec la première biellette 31 lorsque l'amortisseur 2 est comprimé sous l'effet d'une force sensiblement égal à l'effort prédéterminé. D'autres implantations du levier 61 sont possibles en fonction de la cinématique de l'atterrisseur 10. Le levier 61 peut par exemple être solidaire de la tige 21, la tige 21 sortant suffisamment du corps 22 lorsque l'amortisseur 2 est totalement comprimé.

Les figures 5 à 8 représentent les différentes positions de l'atterrisseur 10 lorsque la roue 4 subit un effort qui augmente progressivement jusqu'à un effort important.

Sur la figure 5, la roue 4 est en contact avec le sol 100. Une réaction du sol est appliquée à la roue 4 de sorte qu'une force inférieure à l'effort prédéterminé est exercée sur l'amortisseur 2. L'amortisseur 2 est dans une position intermédiaire dans laquelle la tige 21 n'est pas en appui contre la butée de fin de course 23. La contrefiche 3 est verrouillée grâce à l'effort de traction de l'organe de rappel élastique 71 et du dispositif de butée 72. La roue 4 est maintenue à la position déployée POSD.

Sur la figure 6, l'amortisseur 2 est comprimé sous l'effet du déplacement de la structure 41 de l'aéronef 40 vers le sol 100. La tige 21 est en appui contre la butée de fin de course 23 lorsque la force exercée sur l'amortisseur 2 devient sensiblement égale à l'effort prédéterminé. La bielle 6 est alors alignée avec l'amortisseur 2 et en particulier avec la tige 21. De la sorte, le risque de déformation de la bielle 6, notamment par flambage, est limité. De plus, le levier 61 est, très proche de la première biellette 31, voire en contact contre cette première biellette 31. La contrefiche 3 est toujours verrouillée grâce à l'effort de traction de l'organe de rappel élastique 71 et du dispositif de butée 72. La roue 4 est maintenue dans la position déployée POSD.

Selon la figure 7, la force exercée sur l'amortisseur 2 peut devenir supérieure à l'effort prédéterminé. La butée de fin de course 23 se déforme, par exemple par flambage du tube 25. La tige 21 peut alors se déplacer dans le corps 22 de l'amortisseur 2. Le levier 61 se déplace avec la tige 21, provoquant le déplacement de la première biellette 31 autour de l'axe de rotation AX56 de la sixième liaison mécanique 56, et par suite le déplacement de la seconde biellette 32 autour de l'axe de rotation AX51 de la première liaison mécanique 51. La bielle 6 n'est plus alignée avec la tige 21 de l'amortisseur 2. Suite aux déplacements de la première et de la seconde biellettes 31,32, la contrefiche 3 n'est plus verrouillée malgré l'effort de traction de l'organe de rappel élastique 71 et du dispositif de butée 72. La roue 4 n'est alors plus maintenue dans la position déployée POSD.

En référence à la figure 8, suite au déverrouillage de la contrefiche 3, la première biellette 31 et la seconde biellette 32 continue de se déplacer l'une par rapport à l'autre provoquant un effacement de l'atterrisseur 10. De la sorte, l'effort important subi par la roue 4 ne se transmet pas complètement à l'amortisseur 2 et à la structure 41 de l'aéronef 40, évitant ainsi des dégradations de l'amortisseur 2 et de la structure 41.

Enfin, l'amortisseur 2 peut comporter une valve 24 représentée sur la figure 4. La valve 24 est configurée pour mettre en communication un espace intérieur INT situé à l'intérieur du corps 22 et un milieu extérieur EXT situé à l'extérieur du corps 22 lorsque la valve 24 s'ouvre. La valve 24 est définie et dimensionnée pour s'ouvrir lorsqu'une pression d'un fluide régnant dans le corps 22 est supérieure à une pression prédéterminée, pour éviter par exemple que le fluide empêche un déplacement de la tige 21 dans le corps 22. Alternativement, cette valve 24 peut également être configurée pour mettre en communication deux chambres de part et d'autre d'un diaphragme de laminage de l'amortisseur 2 au-delà d'une pression prédéterminée afin de diminuer les efforts de laminage et donc la pression interne dans l'amortisseur 2.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Atterrisseur (10) rétractable pour aéronef (40), ledit atterrisseur (10) comportant :
- un balancier (1) destiné à être articulé à une structure (41) dudit aéronef (40) et portant au moins une roue (4), ladite au moins une roue (4) étant mobile entre une position déployée (POSD) et une position rétractée (POSR),
- un amortisseur (2) muni d'une tige (21) coulissant dans un corps (22), ledit amortisseur (2) étant destiné à être articulé à ladite structure (41),
- un actionneur (5), et
- une bielle (6) articulée d'une part audit amortisseur (2) par une deuxième liaison mécanique (52) à un unique degré de liberté en rotation et d'autre part au balancier (1), ladite bielle (6) étant désalignée dudit amortisseur (2) lorsqu'une force inférieure à un effort prédéterminé est exercée sur ledit amortisseur (2),
**caractérisé en ce que** ledit atterrisseur (10) comporte :
- une contrefiche (3) munie d'une première biellette (31) et d'une seconde biellette (32) articulées entre elles par une première liaison mécanique (51), ladite première biellette (31) étant articulée audit amortisseur (2), ledit actionneur (5) étant d'une part destiné à être relié à ladite structure (41) et d'autre part relié à ladite seconde biellette (32) afin d'entraîner en rotation ladite seconde biellette (32) par rapport à ladite structure (41), et
- un dispositif de verrouillage (7) comportant un organe de rappel élastique (71) et un dispositif de butée (72), ledit organe de rappel élastique (71) étant fixé par deux extrémités respectivement à ladite contrefiche (3) et à un ensemble articulé comportant ledit balancier (1), ladite bielle (6) et une troisième liaison mécanique (53) entre ledit balancier (1) et ladite bielle (6), ledit organe de rappel élastique (71) exerçant un effort de traction entre ladite contrefiche (3) et ledit ensemble articulé, ledit dispositif de butée (72) étant configuré pour arrêter un déplacement relatif entre lesdites première et seconde biellettes (31,32) autour d'un axe de rotation (AX51) de ladite première liaison mécanique (51) généré par ledit effort de traction lorsque ladite roue (4) est dans ladite position déployée (POSD).

2. Atterrisseur (10) selon la revendication 1,
dans lequel ledit actionneur (5) est un moteur électrique rotatif.

3. Atterrisseur (10) selon l'une quelconque des revendications 1 à 2,
dans lequel ladite bielle (6) est articulée à ladite tige (21) et ladite première biellette (31) est articulée audit corps (22), ledit corps (22) étant articulé à ladite structure (41).

4. Atterrisseur (10) selon l'une quelconque des revendications 1 à 2,
dans lequel ladite bielle (6) est articulée audit corps (22) et ladite première biellette (31) est articulée à ladite tige (21), ladite tige (21) étant articulée à ladite structure (41).

5. Atterrisseur (10) selon l'une quelconque des revendications 1 à 4,
dans lequel un axe de rotation de ladite première biellette (31) par rapport audit amortisseur (2) et un axe de rotation de ladite seconde biellette (32) par rapport à ladite structure (41) forment un plan perpendiculaire à un axe de débattement (AX2) dudit amortisseur (2), ladite roue (4) étant dans ladite position déployée (POSD).

6. Atterrisseur (10) selon l'une quelconque des revendications 1 à 5,
dans lequel un axe de rotation de ladite première biellette (31) par rapport audit amortisseur (2) et un axe de rotation de ladite seconde biellette (32) par rapport à ladite structure (41) et un axe de rotation ladite première biellette (31) par rapport à ladite seconde biellette (32) peuvent être parallèles entre eux et coplanaires lorsque ladite roue (4) est dans ladite position déployée(POSD).

7. Atterrisseur (10) selon l'une quelconque des revendications 1 à 6,
dans lequel ledit organe de rappel élastique (71) est fixé par une de ses deux extrémités à ladite première biellette (31), à ladite seconde biellette (32) ou à ladite première liaison mécanique (51), et par l'autre de ses deux extrémités audit balancier (1), à ladite bielle (6) ou à ladite articulation entre ledit balancier (1) et ladite bielle (6).

8. Atterrisseur (10) selon l'une quelconque des revendications 1 à 7,
dans lequel ladite bielle (6) est droite et alignée avec ledit amortisseur (2) lorsque ledit amortisseur (2) est comprimé sous une force égale audit effort prédéterminé, ladite roue (4) étant dans ladite position déployée (POSD).

9. Atterrisseur (10) selon l'une quelconque des revendications 1 à 8,
dans lequel ledit amortisseur (2) comporte une butée de fin de course (23) déformable agencée dans ledit corps (22), ladite butée de fin de course (23) étant configurée pour se déformer lorsque ledit atterrisseur (10) se comprime sous une force supérieure audit effort prédéterminé, ladite roue (4) étant dans ladite position déployée (POSD).

10. Atterrisseur (10) selon l'une quelconque des revendications 1 à 9,
dans lequel ledit atterrisseur (10) comporte un levier (61), ledit levier (61) étant configuré pour être en contact avec ladite première biellette (31) lorsque ledit amortisseur (2) est comprimé sous une force égale audit effort prédéterminé, ladite roue (4) étant dans ladite position déployée (POSD), ledit levier (61) étant agencé de sorte à provoquer un déplacement de ladite première biellette (31) lorsque ledit amortisseur (2) se comprime sous une force supérieure audit effort prédéterminé.

11. Atterrisseur (10) selon les revendications 9 et 10,
dans lequel ledit levier (61) est configuré pour être en contact avec ladite première biellette (31) lorsque ladite tige (22) est en appui contre ladite butée de fin de course (23).

12. Atterrisseur (10) selon l'une quelconque des revendications 10 à 11,
dans lequel ledit levier (61) est agencé sur ladite bielle (6), ou sur ladite tige (21) lorsque ladite bielle (6) est articulée à ladite tige (21), ou sur ledit corps (22) lorsque ladite bielle (6) est articulée audit corps (22).

13. Atterrisseur (10) selon l'une quelconque des revendications 9 à 12,
dans lequel ledit amortisseur (2) comporte une valve (24) configurée pour mettre en communication un espace intérieur (INT) situé dans ledit corps (22) et un milieu extérieur (EXT) situé en dehors dudit corps (22), ladite valve (24) s'ouvrant pour une pression régnant dans ledit corps (22) supérieure à une pression prédéterminée.

14. Atterrisseur (10) selon l'une quelconque des revendications 1 à 13,
dans lequel une première longueur de ladite première biellette (31) est supérieure à une seconde longueur de ladite seconde biellette (32).

15. Atterrisseur (10) selon la revendication 14,
dans lequel ladite seconde longueur est comprise entre un quart et un cinquième de ladite première longueur.

16. Aéronef (40) comportant au moins un atterrisseur (10) selon l'une quelconque des revendications 1 à 15.

## Patentansprüche

1. Einziehbares Landegestell (10) für ein Luftfahrzeug (40), wobei das Landegestell (10) umfasst:
- einen Schwenkarm (1), der zur Anlenkung an eine Struktur (41) des Flugzeugs (40) vorgesehen ist und mindestens ein Rad (4) trägt, wobei das mindestens eine Rad (4) zwischen einer ausgefahrenen Position (POSD) und einer eingefahrenen Position (POSR) beweglich ist,
- einen Stoßdämpfer (2) mit einer in einem Körper (22) verschiebbaren Stange (21), wobei der Stoßdämpfer (2) zur Anlenkung an die Struktur (41) vorgesehen ist,
- einen Aktuator (5) und
- eine Koppelstange (6), die einerseits über eine zweite mechanische Verbindung (52) mit einem einzigen Freiheitsgrad in der Drehung an dem Stoßdämpfer (2) und andererseits an dem Schwenkarm (1) angelenkt ist, wobei die Koppelstange (6) gegenüber dem Stoßdämpfer (2) versetzt ist, wenn eine Kraft unterhalb einer vorgegebenen Kraft auf den Stoßdämpfer (2) ausgeübt wird,
**dadurch gekennzeichnet, dass** der Landegestell (10) umfasst:
- eine Strebe (3) mit einem ersten Lenker (31) und einem zweiten Lenker (32), die über eine erste mechanische Verbindung (51) miteinander gelenkig verbunden sind, wobei der erste Lenker (31) an dem Stoßdämpfer (2) angelenkt ist, wobei der Aktuator (5) einerseits zur Verbindung mit der Struktur (41) und andererseits mit dem zweiten Lenker (32) vorgesehen ist, um den zweiten Lenker (32) relativ zur Struktur (41) in Drehung zu versetzen, und
- eine Verriegelungsvorrichtung (7) mit einem elastischen Rückstellelement (71) und einer Anschlagvorrichtung (72), wobei das elastische Rückstellelement (71) mit zwei Enden jeweils an der Strebe (3) und an einer Gelenkanordnung befestigt ist, die den Schwenkarm (1), die Koppelstange (6) und eine dritte mechanische Verbindung (53) zwischen dem Schwenkarm (1) und der Koppelstange (6) umfasst, wobei das elastische Rückstellelement (71) eine Zugkraft zwischen der Strebe (3) und der Gelenkanordnung ausübt, wobei die Anschlagvorrichtung (72) konfiguriert ist, um eine durch die Zugkraft hervorgerufene Relativbewegung zwischen dem ersten und dem zweiten Lenker (31, 32) um eine Drehachse (AX51) der ersten mechanischen Verbindung (51) zu stoppen, wenn sich das Rad (4) in der ausgefahrenen Position (POSD) befindet.

2. Landegestell (10) nach Anspruch 1,
bei dem der Aktuator (5) ein rotierender Elektromotor ist.

3. Landegestell (10) nach einem der Ansprüche 1 bis 2,
bei dem die Koppelstange (6) an der Stange (21) angelenkt ist, der erste Lenker (31) an dem Körper (22) angelenkt ist, und der Körper (22) an der Struktur (41) angelenkt ist.

4. Landegestell (10) nach einem der Ansprüche 1 bis 2,
bei dem die Koppelstange (6) an dem Körper (22) angelenkt ist, der erste Lenker (31) an der Stange (21) angelenkt ist, und die Stange (21) an der Struktur (41) angelenkt ist.

5. Landegestell (10) nach einem der Ansprüche 1 bis 4,
bei dem eine Drehachse des ersten Lenkers (31) relativ zu dem Stoßdämpfer (2) und eine Drehachse des zweiten Lenkers (32) relativ zu der Struktur (41) eine zu einer Schwenkachse (AX2) des Stoßdämpfers (2) senkrechte Ebene bilden, wenn sich das Rad (4) in der ausgefahrenen Position (POSD) befindet.

6. Landegestell (10) nach einem der Ansprüche 1 bis 5,
bei dem eine Drehachse des ersten Lenkers (31) relativ zu dem Stoßdämpfer (2) und eine Drehachse des zweiten Lenkers (32) relativ zu der Struktur (41) und eine Drehachse des ersten Lenkers (31) relativ zu dem zweiten Lenker (32) parallel zueinander und koplanar sein können, wenn sich das Rad (4) in der ausgefahrenen Position (POSD) befindet.

7. Landegestell (10) nach einem der Ansprüche 1 bis 6,
bei dem das elastische Rückstellelement (71) mit einem seiner beiden Enden an dem ersten Lenker (31), an dem zweiten Lenker (32) oder an der ersten mechanischen Verbindung (51) befestigt ist, und mit dem anderen seiner beiden Enden an dem Schwenkarm (1), an der Koppelstange (6) oder an dem Gelenk zwischen dem Schwenkarm (1) und der Koppelstange (6) befestigt ist.

8. Landegestell (10) nach einem der Ansprüche 1 bis 7,
bei dem die Koppelstange (6) gerade ist und mit dem Stoßdämpfer (2) fluchtet, wenn der Stoßdämpfer (2) unter einer der vorgegebenen Kraft entsprechenden Kraft zusammengedrückt wird, wenn sich das Rad (4) in der ausgefahrenen Position (POSD) befindet.

9. Landegestell (10) nach einem der Ansprüche 1 bis 8,
bei dem der Stoßdämpfer (2) einen verformbaren Endanschlag (23) aufweist, der in dem Körper (22) angeordnet ist, wobei der Endanschlag (23) konfiguriert ist, um sich zu verformen, wenn das Landegestell (10) unter einer Kraft zusammengedrückt wird, die größer ist als die vorgegebene Kraft, wenn sich das Rad (4) in der ausgefahrenen Position (POSD) befindet.

10. Landegestell (10) nach einem der Ansprüche 1 bis 9,
bei dem das Landegestell (10) einen Hebel (61) aufweist, und der Hebel (61) konfiguriert ist, um mit dem ersten Lenker (31) in Kontakt zu kommen, wenn der Stoßdämpfer (2) unter einer Kraft zusammengedrückt wird, die gleich der vorgegebenen Kraft ist, wenn sich das Rad (4) in der ausgefahrenen Position (POSD) befindet, und der Hebel (61) eingerichtet ist, um eine Verschiebung des ersten Lenkers (31) zu bewirken, wenn der Stoßdämpfer (2) unter einer Kraft zusammengedrückt wird, die größer ist als die vorgegebene Kraft.

11. Landegestell (10) nach den Ansprüchen 9 und 10,
bei dem der Hebel (61) konfiguriert ist, um mit dem ersten Lenker (31) in Kontakt zu stehen, wenn die Stange (22) gegen den Endanschlag (23) drückt.

12. Landegestell (10) nach einem der Ansprüche 10 bis 11,
bei dem der Hebel (61) an der Koppelstange (6) oder an der Stange (21) angeordnet ist, wenn die Koppelstange (6) an der Stange (21) angelenkt ist, oder an dem Körper (22) angeordnet ist, wenn die Koppelstange (6) an dem Körper (22) angelenkt ist.

13. Landegestell (10) nach einem der Ansprüche 9 bis 12,
bei dem der Dämpfer (2) ein Ventil (24) aufweist, das konfiguriert ist, um einen Innenraum (INT) in dem Körper (22) mit einer Außenumgebung (EXT) außerhalb des Körpers (22) zu verbinden, wobei das Ventil (24) sich öffnet, wenn ein Druck in dem Körper (22) größer als ein vorgegebener Druck ist.

14. Landegestell (10) nach einem der Ansprüche 1 bis 13,
bei dem eine erste Länge des ersten Lenkers (31) größer ist als eine zweite Länge des zweiten Lenkers (32).

15. Landegestell (10) nach Anspruch 14,
bei dem die zweite Länge zwischen einem Viertel und einem Fünftel der ersten Länge beträgt.

16. Luftfahrzeug (40) mit mindestens einem Landegestell (10) nach einem der Ansprüche 1 bis 15.

## Claims

1. Retractable landing gear (10) for an aircraft (40), said landing gear (10) comprising:
- a trailing arm (1) intended to be articulated to a structure (41) of said aircraft (40) and having at least one wheel (4), said at least one wheel (4) being movable between a deployed position (POSD) and a retracted position (POSR),
- a damper (2) provided with a rod (21) sliding in a body (22), said damper (2) being intended to be articulated to said structure (41),
- an actuator (5), and
- a connecting rod (6) articulated on the one hand to said damper (2) by a second mechanical link (52) with a single degree of freedom in rotation and on the other hand to the trailing arm (1), said connecting rod (6) being out of alignment with said damper (2) when a force less than a predetermined effort is applied to said damper (2),
**characterised in that** said landing gear (10) comprises:
- a strut (3) provided with a first tie-rod (31) and a second tie-rod (32) articulated between one another by a first mechanical link (51), said first tie-rod (31) being articulated to said damper (2), said actuator (5) being on the one hand intended to be connected to said structure (41) and on the other hand connected to said second tie-rod (32) in order to cause said second tie-rod (32) to rotate relative to said structure (41), and
- a locking device (7) comprising an elastic return member (71) and a stop device (72), said elastic return member (71) being fixed by two extremities respectively to said strut (3) and to an articulated assembly comprising said trailing arm (1), said connecting rod (6) and a third mechanical link (53) between said trailing arm (1) and said connecting rod (6), said elastic return member (71) exerting a traction force between said strut (3) and said articulated assembly, said stop device (72) being configured to stop any relative displacement between said first and second tie-rods (31, 32) about an axis of rotation (AX51) of said first mechanical link (51) caused by said traction force when said wheel (4) is in said deployed position (POSD).

2. Landing gear (10) according to claim 1,
wherein said actuator (5) is a rotational electric motor.

3. Landing gear (10) according to any one of claims 1 to 2,
wherein said connecting rod (6) is articulated to said rod (21) and said first tie-rod (31) is articulated to said body (22), said body (22) being articulated to said structure (41).

4. Landing gear (10) according to any one of claims 1 to 2,
wherein said first connecting rod (6) is articulated to said body (22) and said first tie-rod (31) is articulated to said rod (21), said rod (21) being articulated to said structure (41).

5. Landing gear (10) according to any one of claims 1 to 4,
wherein an axis of rotation of said first tie-rod (31) relative to said damper (2) and an axis of rotation of said second tie-rod (32) relative to said structure (41) form a plane perpendicular to an axis of stroke (AX2) of said damper (2), said wheel (4) being in said deployed position (POSD).

6. Landing gear (10) according to any one of claims 1 to 5,
wherein an axis of rotation of said first tie-rod (31) relative to said damper (2) and an axis of rotation of said second tie-rod (32) relative to said structure (41) and an axis of rotation of said first tie-rod (31) relative to said second tie-rod (32) can be parallel to one another and coplanar when said wheel (4) is in said deployed position (POSD).

7. Landing gear (10) according to any one of claims 1 to 6,
wherein said elastic return member (71) is fixed by one of its two extremities to said first tie-rod (31), to said second tie-rod (32) or to said first mechanical link (51), and by its other extremity to said trailing arm (1), to said connecting rod (6) or to said articulation between said trailing arm (1) and said connecting rod (6).

8. Landing gear (10) according to any one of claims 1 to 7,
wherein said connecting rod (6) is straight and aligned with said damper (2) when said damper (2) is compressed under a force equal to said predetermined effort, said wheel (4) being in said deployed position (POSD).

9. Landing gear (10) according to any one of claims 1 to 8,
wherein said damper (2) comprises a deformable end-of-travel stop (23) arranged in said body (22), said end-of-travel stop (23) being configured to deform when said landing gear (10) is compressed under a force greater than said predetermined effort, said wheel (4) being in said deployed position (POSD).

10. Landing gear (10) according to any one of claims 1 to 9,
wherein said landing gear (10) comprises a lever (61), said lever (61) being configured to be in contact with said first tie-rod (31) when said damper (2) is compressed under a force equal to said predetermined effort, said wheel (4) being in said deployed position (POSD), said lever (61) being arranged so as to cause a displacement of said first tie-rod (31) when said damper (2) is compressed under a force greater than said predetermined effort.

11. Landing gear (10) according to claims 9 and 10,
wherein said lever (61) is configured to be in contact with said first tie-rod (31) when said rod (22) is resting against said end-of-travel stop (23).

12. Landing gear (10) according to any one of claims 10 to 11,
wherein said lever (61) is arranged on said connecting rod (6), or on said rod (21) when said connecting rod (6) is articulated to said rod (21), or on said body (22) when said connecting rod (6) is articulated to said body (22).

13. Landing gear (10) according to any one of claims 9 to 12,
wherein said damper (2) comprises a valve (24) configured to create communication between an internal space (INT) located inside said body (22) and an external environment (EXT) located outside said body (22), said valve (24) opening when the pressure prevailing inside said body (22) exceeds a predetermined pressure.

14. Landing gear (10) according to any one of claims 1 to 13,
wherein a first length of said first tie-rod (31) is greater than a second length of said second tie-rod (32).

15. Landing gear (10) according to claim 14,
wherein said second length is between one quarter and one fifth of said first length.

16. Aircraft (40) comprising at least one landing gear (10) according to any one of claims 1 to 15.
